(19) **Europäisches Patentamt**

**European Patent Office**

**Office européen des brevets**

(11) **EP 1 424 501 A2**

(12) # EUROPEAN PATENT APPLICATION

(43) Date of publication:
**02.06.2004 Bulletin 2004/23**

(51) Int Cl.[7]: **F16C 32/06**

(21) Application number: **03023954.5**

(22) Date of filing: **22.10.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **24.10.2002 JP 2002309354**

(71) Applicants:
• **NIPPON STEEL CORPORATION**
  **Tokyo 100-8071 (JP)**

• **Krosaki Harima Corporation**
  **Fukuoka 806-8586 (JP)**

(72) Inventors:
• **Mukai, Toshio**
  **Chiyoda-ku Tokyo 100-8071 (JP)**
• **Ishitobi, Keigo, Krosaki Harima Corporation**
  **Kitakyushu-shi Fukuoka 806-8586 (JP)**

(74) Representative: **VOSSIUS & PARTNER**
  **Siebertstrasse 4**
  **81675 München (DE)**

(54) **Hydrostatic gas bearing**

(57) A hydrostatic gas bearing having excellent damping characteristics. The hydrostatic gas bearing is of the orifice type having an air groove communicated with a gas injection port, wherein when a bearing clearance is denoted by h and a depth of the air groove by g, h is not larger than 5 μm and g/h is not smaller than 5. The material of the guide, slider and orifice constituting the bearing is alumina, silicon carbide, silicon nitride, Sialon, cordierite, or a composite ceramic comprising any one of them, as a main component.

## Fig.1

EP 1 424 501 A2

**Description**

Precision machine tools and inspection apparatus require a moving stage for bringing work or a mother disk into a position at high speed while maintaining high precision. This invention is concerned with a hydrostatic gas bearing used for the moving stage.

A hydrostatic gas bearing is constituted between a guide and a slider of a moving stage. Usually, a gas such as the air is injected to the guide from an orifice provided in the slider to form a gaseous film having bearing stiffness between the guide and the slider. Upon forming the gaseous film, the static pressure gas bearing works as a non-contact bearing having stiffness.

The gas bearing is a clean bearing which is contactless and does not require a lubricant such as oil or the like, but has poor vibration damping performance, due to the effect of compressibility of gas, and a small coefficient of viscosity. For example, the amplitude of free vibration in the viscous damping system becomes small being proportional to $\exp(-\zeta\omega_n t)$ (where $\zeta$ is the damping ratio and $\omega_n$ is the specific angular vibration of the system), and $\zeta$ of the air bearing is in many cases about 0.05. To improve stopping performance or synchronizing performance of the stage, it is advantageous to use a bearing having a large damping ratio $\zeta$. No prior art has ever been proposed for radically improving the damping ratio $\zeta$.

The oriffice-type bearing has an air groove, communicated with the orifice, formed in the whole surface of the bearing to enhance its stiffness. The clearance of the bearing of this type is not smaller than 5 $\mu$m and the depth of the air groove is not larger than 20 $\mu$m (for example, see Japanese Unexamined Patent Publication (Kokai) No. 3-213718). The clearance of the bearing has been set to be not smaller than 5 $\mu$m chiefly because the member constituting the bearing is a metal and it is difficult to machine the bearing surface and, besides, even if precisely finished, the bearing is scarred during the use and precision is not, in many cases, maintained. Further, iron-based materials or aluminum-based materials used for the bearing has a large coefficient of thermal expansion, and the clearance of the bearing varies depending upon a change in the ambient temperature and it is considered that the bearing characteristics vary to a large extent. The depth of the air groove is limited to be not larger than 20 $\mu$m because, when the depth is greater than this value, the bearing becomes unstable and often undergoes self-excited vibration.

It is an object of the present invention to provide a hydrostatic gas bearing having excellent damping characteristics.

The present inventors have conducted theoretical calculations while greatly varying the clearance of the bearing and the depth of the groove, without being hampered by a traditional technology of bearings, under circumstances where a ceramic, such as alumina and the like, can now be used as bearing materials on an industrial basis. As a result, the inventors have invented a bearing having a very high damping ratio while having a small bearing clearance. The object above can be achieved by the features defined in the claims. Namely, the gist of the present invention is as described below.

(1) A hydrostatic gas bearing of the orifice type having an air groove 5 communicated with a gas injection port 3, wherein when a bearing clearance is denoted by h and a depth of the air groove by g, h is not larger than 5 $\mu$m and g/h is not smaller than 5.
(2) A hydrostatic gas bearing, as set forth in (1) above, wherein the material of parts constituting the bearing is alumina, silicon carbide, silicon nitride, sialon, cordierite, or a composite ceramic comprising any one of them, as a main component.

Here, an end of the orifice 2 on the side of injecting the gas is defined to be the gas injection port 3. The invention is described in more detail in conjunction with the drawings, in which;

Fig. 1 is a view schematically illustrating a bearing of the orifice type;
Fig. 2 is a view schematically illustrating the structure of an air groove of a cross-T shape;
Fig. 3 is a diagram illustrating the calculated results of a damping ratio $\zeta$ of when the bearing clearance is h = 3 $\mu$m;
Fig. 4 is a diagram illustrating the calculated results of a damping ratio $\zeta$ of when the bearing clearance is h = 5 $\mu$m; and
Fig. 5 is a diagram illustrating the calculated results of a damping ratio $\zeta$ of when the bearing clearance is h = 7 $\mu$m.

The invention will now be described by way of a preferred embodiment. Though the embodiment is based on simulated results based on hydrodynamics, it has been widely known in this field of art that the results are closely reproduced even in an experiment.

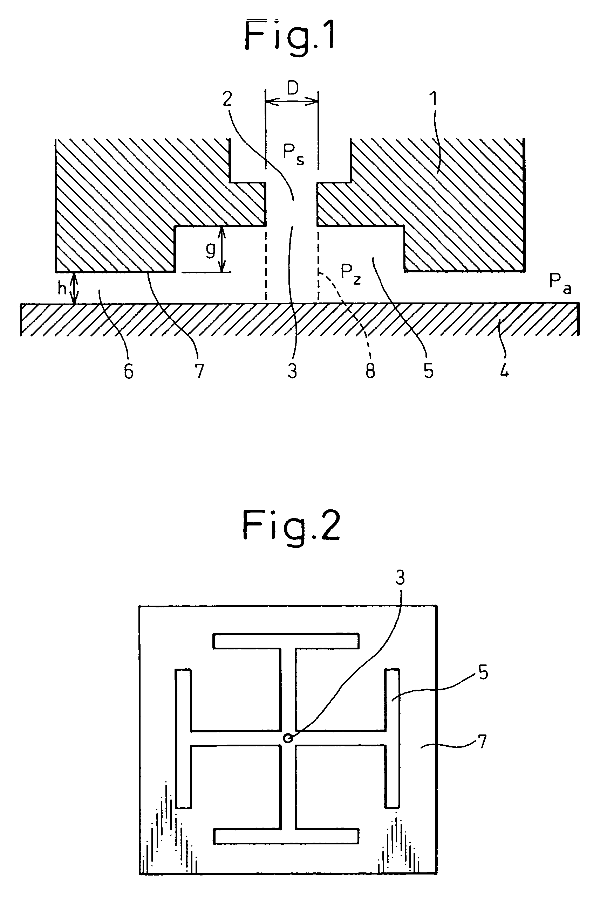

The bearing with which the present invention is concerned is a hydrostatic gas bearing using the orifice 2 as gas injection means. Fig. 1 is a sectional view of the hydrostatic gas bearing using the orifice 2 as gas injection means. Before describing a relationship between the squeezing effect and the mass flow rate of the gas, Fig. 1 illustrates a case where a inherently-compensated state is realized in the air groove 5 just under the orifice 2.

A gas, fed at a feed pressure $P_s$, is injected from the gas injection port 3 at an end of the orifice 2 and assumes a pressure $P_z$ when it spreads in the air groove 5 due to the squeezing effect based on adiabatic expansion (due to a inherently-compensated restriction effect in the case of Fig. 1). The gas from an imaginary cylinder 8 just under the orifice spreads in the air groove, and is emitted to the exterior of the bearing from the air groove 5 passing through a bearing land 7. The gas pressure decreases down to the atmospheric pressure $P_a$ while receiving a viscous resistance as it passes from the air groove 5 to the end of the bearing through the land 7.

According to the hydrodynamics, the mass flow rate of the gas is expressed as follows:

(1) Mass flow rate injected from the orifice 2,

$$M_l = [C_D A P_s/(RT)^{1/2}] \cdot \psi_0$$

where, when

$$P_z/P_s \geq [2/(\kappa+1)]^{\kappa/(\kappa-1)}$$

$$A = \pi D(g + h)$$

$$\psi_0 = [2\kappa/(\kappa-1)]^{1/2} \cdot [(P_z/P_s)^{2/\kappa} - (P_z/P_s)^{(\kappa+1)/\kappa}]^{1/2}$$

(2) Mass flow rate that goes out through the bearing clearance 6 while receiving viscous resistance,

$$M_2 = [(h + g)^3/24\mu RT] \cdot [C_{i,j}P^2_{i,j} - C_{i,j-1}P^2_{i,j-1} \cdots]$$

which is a matrix expression based on the calculation by a method of finite differences as a prerequisite. Here, $P_{i,j}$ is a pressure at a point (i, j), $C_{i,j}$ is a coefficient thereof, and other parameters are as described below.

D: diameter of orifice, g: depth of air groove, h: clearance of bearing, $C_D$: coefficient of flow rate ($\fallingdotseq 0.9$), $\mu$: coefficient of viscosity of the gas, R: gas constant, T: temperature, $\kappa$: ratio of specific heat.

In an equilibrium state, a balance is maintained in the mass that enters into, and goes out from, a divisional element inclusive of the orifice. Namely, $M_1 = M_2$. The mass flow rate is preserved even in the air groove and in the land other than the orifice and, hence, there is derived a relationship between pressures at the lattice points for each of the divisional elements. By solving these relationships, there is found a distribution of equilibrium pressure.

When there is a change with the passage of time, the following relationship applies ($M_1 = 0$ for the divisional element without including orifice).

$$M_1 - M_2 = (1/RT) \cdot \partial(P_{i,j} \cdot V_{i,j})/\partial t$$

where $V_{i,j}$ is a volume of the bearing clearance in the divisional element at a point (i, j). The dynamic characteristics were calculated based on a method of perturbation about an equilibrium point. Namely, a formula was established as $h = h_0 + \Delta h \cdot \exp(i\omega t)$, $P_{i,j} = P_0 + \Delta P_{i,j} \cdot \exp(i\omega t)$, and relationships for finding a complex dynamic stiffness $E_{i,j} = \Delta P_{i,j}/\Delta h$ were derived for each of the lattice points. These relationships were simultaneously solved to find $E_{i,j}$ for each of the lattice points. When the sum of real number components of $E_{i,j}$ for all lattice point is denoted by A and the sum of imaginary number components by B, the damping ratio $\zeta$ is given by $\zeta = B/(2A)$. The damping ratio $\zeta$ varies depending upon the frequency f (where $\omega = 2\pi f$). In the calculation of the hydrodynamics, the calculated results are rearranged depending upon the squeeze number $\sigma$ which varies in proportion to the frequency. A squeeze number of a rectangular pad having a longitudinal size a and a transverse size b is expressed by the following formula,

$$\sigma = (12\mu\omega/P_a) \cdot (a \cdot b/c^2)$$

where c is a representative bearing clearance which may assume any value. In this calculation, however, c = 5 $\mu$m is employed. Here, the pad stands for a portion where the gas pressure is greater than the atmospheric pressure limiting the bearing surface.

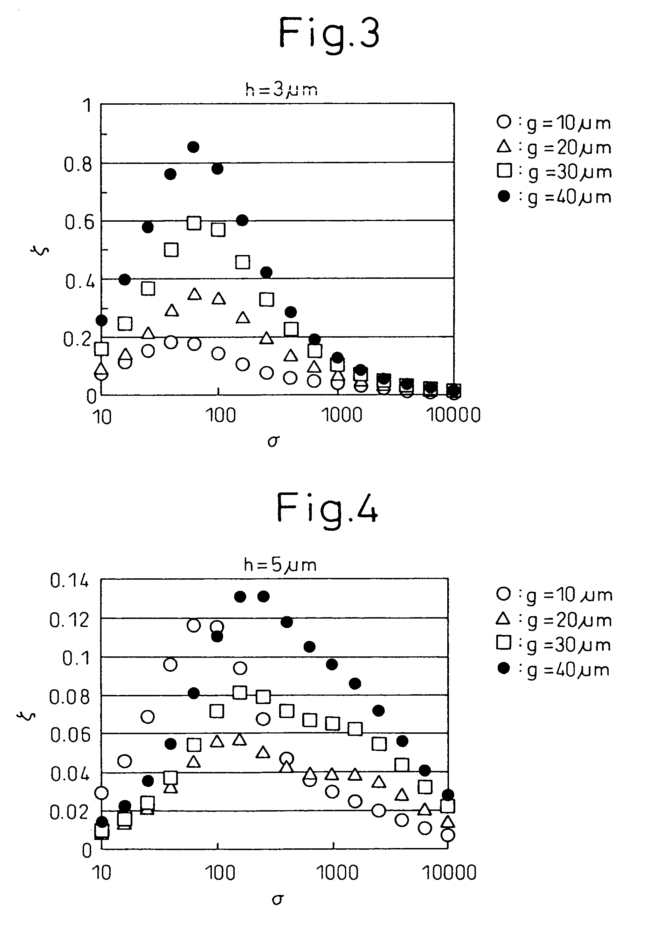

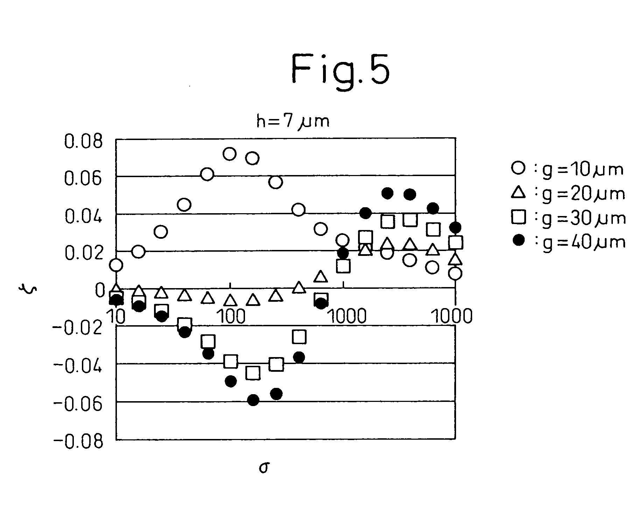

An embodiment of the invention will now be described with reference to the air groove of a typical cross-T pattern. Fig. 2 is a model bearing used for the calculation. The pad size is a = b = 40 mm, the orifice 2 has a diameter D = 0.2 mm, and the air groove 5 has a width of 1 mm. The distance (land width) from the center line of the air groove of the outermost circumference to the outer periphery of the pad is 6·mm. The feed pressure is 0.4 MPa in terms of a pressure difference from the atmospheric pressure, and the groove depth g is varied to calculate the damping ratio $\zeta$ with respect to the typical bearing clearance h. Figs. 3, 4 and 5 show the calculated results of when h = 3, 5 and 7 $\mu$m with respect to the squeeze number $\sigma$.

with bearing clearances of h = 5 to 7 $\mu$m, which are usually used, the damping ratio greatly changes depending upon the depth of the air groove. When the groove depth exceeds 20 $\mu$m, there appears a region of $\sigma$ where the damping ratio assumes a negative sign. In the region where the damping ratio assumes a negative sign, the bearing undergoes the self-excited vibration. Therefore, the bearing is not used in this region. These tendencies greatly change when h = 3 $\mu$m. As the groove depth increases, conversely, the damping ratio increases in the positive direction. The present invention is based on these new findings. That is, unlike the conventional concept, the phenomenon in which the damping ratio increases with an increase in the depth of the air groove, appears when the bearing clearance is not larger than 5 $\mu$m. As a first condition of the invention, therefore, the bearing clearance h is set to be not larger than 5 μm. Further, this phenomenon becomes conspicuous as a relative value of the air groove depth g and the bearing clearance h increases. Calculation shows that the phenomenon becomes conspicuous at around g/h = 5. As a second condition of the invention, therefore, g/h is set to be not smaller than 5.

The present invention is not limited to the pad structure of this embodiment only. The diameter of the orifice 2 may be from about 0.1 to about 0.3 mm, and two or more orifices 2 may be included in one pad. Further, the structure of the air groove 5 communicated with the orifice is not limited to the cross-T shape only of this embodiment. The similar result can be obtained even with groove structures which are separately communicated with two or more orifices. In this embodiment, the groove has a single depth. The depth, however, may be varied depending upon the portions of the groove without departing from the scope of the invention.

As the bearing clearance 6 decreases, it becomes important to select the material of the members constituting the bearings. With the customarily used iron-based or aluminum-based metals, it is difficult to carry out the machining maintaining high precision. Besides, the bearing is scarred while being assembled or used and, often, becomes unusable. Further, the above metals have a large coefficient of thermal expansion, and the bearing clearance undergoes a change depending upon a change in the temperature during the use. A narrow clearance may often be extinguished due to a rise in the temperature. When the bearing clearance is limited to be not larger than 5 μm as in this invention, it is not desired to use the above-mentioned metals. Instead, there can be preferably used a ceramic that can be easily machined in a high precision without being scarred caused by contact and the like, and that permits the size to change little irrespective of a change in the temperature.

As a ceramic for the bearing of the present invention, there can be preferably used alumina which is inexpensive, has a high rigidity and has a coefficient of thermal expansion which is as low as 5.3 ppm/K. When a more high rigidity is required, there can be desirably used silicon carbide having a coefficient of thermal expansion of 2.3 ppm/K. As a bearing used maintaining a bearing clearance of not larger than 3 μm, in particular, there can be desirably used silicon nitride or Sialon having a coefficient of thermal expansion at room temperature of 1.2 ppm/K or cordierite-based zero-expansion ceramics having a coefficient of thermal expansion of not larger than 0.1 ppm/K.

According to the embodiment of the present invention, it is desired that the slider 1, guide 4 and orifice constituting the bearing are all made of the same type of ceramic. However, the member (nozzle) having the orifice 2 may be separately mounted and made of a ceramic of a different kind or a different metallic material. The air groove 5 can be formed by ordinary fine machining using a diamond drill, or by laser machining or a sand blast machining.

According to the present invention, the bearing clearance is set to be not larger than 5 μm and the air groove depth g/bearing clearance h is selected to be not smaller than 5, in order to realize an orifice type hydrostatic gas bearing having a very high damping ratio.

According to the present invention, further, the material of parts constituting the bearing is alumina, silicon carbide, silicon nitride, Sialon, cordierite, or a composite ceramic of any one of them, as a chief component to realize a bearing that can be easily machined in a high precision without being scarred by contact and the like, and that permits the size to change little irrespective of a change in the temperature.

**Claims**

1. A hydrostatic gas bearing of the orifice type having an air groove communicated with a gas injection port, wherein h is not larger than 5 μm and g/h is not smaller than 5, wherein a bearing clearance is denoted by h and a depth of the air groove by g.

2. A hydrostatic gas bearing as set forth in claim 1, wherein the material of parts constituting the bearing is alumina, silicon carbide, silicon nitride, Sialon, cordierite, or a composite ceramic comprising any one of them, as a main component.

# Fig.1

# Fig.2

# Fig.3

# Fig.4

# Fig.5